# EUROPÄISCHE PATENTSCHRIFT

(11) **EP 0 827 469 B1**
(45) Veröffentlichungstag und Bekanntmachung des Hinweises auf die Patenterteilung: **06.06.2001**
(21) Anmeldenummer: 96945143.4
(22) Anmeldetag: 19.09.1996
(51) Int. Cl.: B60T 13/66

(54) **VERFAHREN UND VORRICHTUNG ZUR STEUERUNG DER BREMSANLAGE EINES FAHRZEUGS**
PROCESS AND DEVICE FOR CONTROLLING A VEHICLE BRAKING SYSTEM
PROCEDE ET DISPOSITIF PERMETTANT DE COMMANDER LE SYSTEME DE FREINAGE D'UN VEHICULE

(30) Priorität: 06.02.1996 DE 19604126
(43) Veröffentlichungstag der Anmeldung: 11.03.1998
(73) Patentinhaber: ROBERT BOSCH GMBH, 70442 Stuttgart (DE)
(72) Erfinder: SCHMITT, Johannes, D-71706 Markgröningen (DE)
(86) Internationale Anmeldenummer: DE9601828
(87) Internationale Veröffentlichungsnummer: WO9729001

(56) Entgegenhaltungen:
- EP-A- 0 698 538
- DE-A- 3 729 183
- DE-A- 4 107 978
- DE-A- 4 123 783

## Beschreibung

### Stand der Technik

Die Erfindung betrifft ein Verfahren und eine Vorrichtung zur Steuerung der Bremsanlage eines Fahrzeugs gemäß den unabhängigen Patentansprüchen.

Ein derartiges Verfahren bzw. eine derartige Vorrichtung ist beispielsweise aus der DE-A 41 23 783 (US-Patent 5 419 622) bekannt. Diese beschreibt ein Antriebsschlupfregelsystem, bei welchem bei Durchdrehneigung an wenigstens einem Antriebsrad das zum Durchdrehen neigende Rad durch Betätigung der zugeordneten Radbremse abgebremst wird. Bei der dort beschriebenen Bremsanlage handelt es sich um eine hydraulische Bremsanlage, bei welcher Druck in den Radbremsen unter Aktivierung eines druckerzeugenden Mittels (Pumpe) und durch Ansteuern einer Ventilanordnung auf- und abgebaut wird. Zum Druckaufbau und -abbau im Rahmen der Antriebsschlupfregelung wird gemäß der bekannten Vorgehensweise ausgehend von der Abweichung der Radgeschwindigkeit des zum Durchdrehen neigenden Rades zu einer Referenzgeschwindigkeit eine Druckaufbaupulsreihe bzw. Druckabbaupulsreihe bestimmt mit Pulsen vorgegebener Länge.

Dabei wird nicht beachtet, daß die Dynamik des Druckauf-bzw. -abbaus von verschiedenen Faktoren, wie beispielsweise der Temperatur (Außentemperatur bzw. Temperatur der Hydraulik), bei einer Änderung des von dem druckerzeugenden Mittel erzeugten Basisdruckes und/oder der Höhe der Spannungsversorgung des druckerzeugenden Mittels abhängig ist. Somit kann es in einigen Anwendungsfällen zu einer verschlechterten Druckänderungsdynamik kommen.

Aus der DE 37 29 183 A1 ist eine Vorgehensweise bekannt, nach der das Ansteuersignal für ein elektromagnetisches Ventil abhängig von Temperaturschwankungen beeinflusst wird. Dabei wird zur Temperaturermittlung die Temperatur des Fluids und/oder der Strom durch die Ventilwicklung ermittelt. Dies bedeutet einen unerwünschten zusätzlichen Aufwand, um die Fluidviskosität bei der Ventilsteuerung zu berücksichtigen. Ferner werden andere Einflüsse auf die Druckänderungsdynamik nicht berücksichtigt.

Es ist daher Aufgabe der Erfindung, Maßnahmen zur Verbesserung der Druckänderungsdynamik anzugeben.

Dies wird durch die kennzeichnenden Merkmale der unabhängigen Patentansprüche erreicht.

Neben der Antriebsschlupfregelung finden Druckänderungen in wenigstens einer Radbremse auch im Rahmen anderer Steuerungen bzw. Regelungen statt, beispielsweise bei einer Antiblockierregelung, einer Fahrdynamikregelung oder einer elektrischen Bremsensteuerung. Auch in diesen Anwendungsgebieten, sowohl bei hydraulischen als auch bei pneumatischen Bremsanlagen, können die obengenannten Probleme auftreten.

### Vorteile der Erfindung

Durch die erfindungsgemäße Lösung ist die Druckänderungsdynamik bei der Steuerung einer Bremsanlage in allen Betriebssituationen zufriedenstellend.

Dabei ist besonders vorteilhaft, daß eine Verschlechterung der Dynamik des Druckaufbaus bzw. des Druckabbaus bei tiefen Temperaturen, bei einer Änderung des aufgebauten Basisdrucks und/oder bei einer Änderung der Versorgungsspannung des druckerzeugenden Mittels wirksam verhindert wird und auch in diesen Betriebssituationen eine zufriedenstellende Dynamik erreicht wird.

Damit verbunden sind erhebliche Verbesserungen der Regelung, in der die erfindungsgemäße Lösung eingesetzt wird.

Derartige Regelungen, bei denen die erfindungsgemäße Lösung Vorteile bringt, sind Antriebsschlupfregelungen, Antiblockierregelungen, Fahrdynamikregelungen und/oder Druckregelungen im Rahmen elektrisch gesteuerter Bremsanlagen sowohl bei hydraulischen als auch pneumatischen Bremsanlagen.

Besonders vorteilhaft ist, daß die Temperatur der Hydraulik bzw. die Außentemperatur über einen entsprechenden Sensor erfaßt oder aus dem Nachlaufverhalten des druckerzeugenden Mittels nach dessen Abschalten abgeschätzt wird.

Weitere Vorteile ergeben sich aus der nachfolgenden Beschreibung von Ausführungsbeispielen bzw. den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild einer Steuereinrichtung zur Steuerung einer Bremsanlage, bei welcher die erfindungsgemäße Lösung eingesetzt wird. In Figur 2 zeigt ein Flußdiagramm die Realisierung der erfindungsgemäßen Lösung als Programm eines Mikrocomputer, der Teil der Steuereinrichtung ist. In den Figuren 3 und 4 schließlich wird die erfindungsgemäße Lösung anhand von Zeitdiagrammen dargestellt.

### Beschreibung von Ausführungsbeispielen

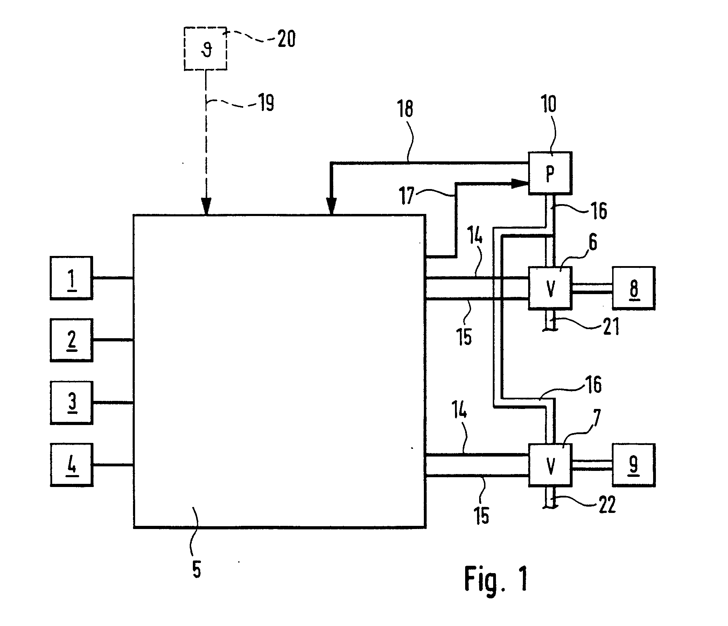

Figur 1 zeigt ein Blockschaltbild einer Steuereinrichtung für eine Bremsanlage, die eine Antriebsschlupfregelung, eine Antiblockierregelung, eine Fahrdynamikregelung und/oder eine Regelung abhängig vom Bremswunsch des Fahrers durch Druckänderung in wenigstens einer Radbremse durchführt. Dabei sind mit den Rädern des Fahrzeugs verbundene Geschwindigkeitssensoren 1-4 dargestellt, welche über entsprechende Signalleitungen mit einer elektronischen Steuereinheit 5 verbunden sind. Ferner sind zwei Radbremsen 8 und 9 dargestellt, die im bevorzugten Anwendungsfall einer Antriebsschlupfregelung den angetriebenen Rädern des Fahrzeugs zugeordnet sind. Auf die Darstellung der Radbremsen der anderen Räder wurde aus Übersichtlichkeitsgründen in Figur 1 verzichtet. Den Radbremsen 8 und 9 sind elektrisch betätigbare Ventilanordnungen 6 und 7 zugeordnet, mit deren Hilfe der Druck in den Radbremsen gesteuert werden kann. Die Ventilanordnungen sind dabei jeweils mit der elektronischen Steuereinheit über Ansteuerleitungen 14 und 15 verbunden. Über diese werden die Ventile zum Druckaufbau und zum Druckabbau gesteuert. Ferner ist eine Druckquelle 10 (Pumpe) vorgesehen, welche in den Bremsleitungen 16 einen Basisdruck aufbaut, bzw. Druckmittel aus den Bremsen über Rückführleitungen 21, 22 absaugt. Diese Druckquelle ist über die Leitung 17 mit dem elektronischen Steuergerät zur Ansteuerung verbunden. Ferner wird über eine Leitung 18 von der Druckquelle 10 zur elektronischen Steuereinheit 5 geführt, über die ein Maß für die Pumpenmotorspannung (Potential an einer Motorklemme) übermittelt wird. Ferner ist im bevorzugten Ausführungsbeispiel eine Eingangsleitung 19 der Steuereinheit 5 vorgesehen, die diese mit einer Meßeinrichtung 20 zur Erfassung der Umgebungs- bzw. Hydrauliktemperatur und/oder des Systemdrucks in den Bremsleitungen 16 verbindet. Im Zusammenhang mit anderen Anwendungsbeispielen, z.B. einer Fahrdynamikregelung, sind weitere, nicht dargestellte Eingangsleitungen der Steuereinheit 5 vorgesehen, beispielsweise eine Eingangsleitung von einem Gierratensensor, von Drucksensoren, etc..

Die elektronische Steuereinheit 5 gewinnt in bekannter Weise aus den Sensorsignalen der Radgeschwindigkeitssensoren 1-4 Steuersignale für die angetriebenen Räder, die anzeigen, ob an wenigstens einem Rad eine Durchdrehneigung vorliegt (Regelabweichung BRA am Rad i > 0). Ist dies der Fall, so werden von der Steuereinheit über wenigstens eine der Leitungen 14 Pulse abgegeben. Diese stellen während der Pulszeit die Ventile 6 bzw. 7 in die Stellung, in der in die Bremsen 8 bzw. 9 Druck von der Druckquelle 10 eingesteuert wird. Verschwindet dann das Steuersignal (BRA < 0), dann werden entsprechenden Druckabbaupulse über wenigstens eine der Leitungen 15 zu den Ventilen 6 bzw. 7 gegeben, die im Sinne einer Verbindung der Bremszylinder mit hier nur angedeuteten Rücklaufleitungen 21 und 22 angesteuert werden.

In einem bevorzugten Ausführungsbeispiel wird bei Auftreten einer Regelabweichung (BRAi > 0) an wenigstens einem Rad ein erster Druckaufbaupuls mit der Pulslänge T1 wirksam. Bei weiter anliegender Regelabweichung werden weitere Aufbaupulse vorbestimmter Länge ausgegeben, die eine Druckänderung in der entsprechenden Radbremse bewirken, vorzugsweise gleiche Druckänderungen von z.B. 10 bar. Diese Druckaufbaupulse werden so lange ausgegeben, bis die Regelabweichung verschwindet. Danach werden entsprechend Druckabbaupulse erzeugt, die den in der Radbremse aufgebauten Druck abbauen. Bei erneutem Auftauchen einer Regelabweichung werden wieder Aufbaupulse ausgesendet, bzw. bei Abklingen der Regelabweichung die Regelung beendet.

Entsprechend werden Druckaufbau- und Druckabbaupulse im Rahmen einer Antiblockierregelung, einer Fahrdynamikregelung oder eine Druckregelung abhängig vom Fahrerbremswunsch erzeugt.

Durch die Temperaturabhängigkeit des Hydrauliköls, der Ventilöffnungszeiten, der Pumpenförderung, etc. sowie durch die Abhängigkeit der Druckaufbaugeschwindigkeit von dem von der Pumpe erzeugten Druck ist die Druckaufbaudynamik nicht in allen Betriebssituationen gleich. Es ist daher Grundgedanke der erfindungsgemäßen Lösung, die Druckaufbauund Druckabbauimpulse abhängig von Größen zu korrigieren, welche die Dynamik der Druckänderung beeinflussen. Als besonders zweckmäßig hat es sich erwiesen, die Korrektur abhängig von der Temperatur der Umgebungsluft bzw. der Hydraulik, abhängig von der Versorgungsspannung am Pumpenmotor und/oder vom den von der Pumpe erzeugten System(Basis)druck zu wählen.

Dabei haben sich in einem bevorzugten Ausführungsbeispiel einer Bremsanlage folgende Werte ergeben (Tabelle 1):

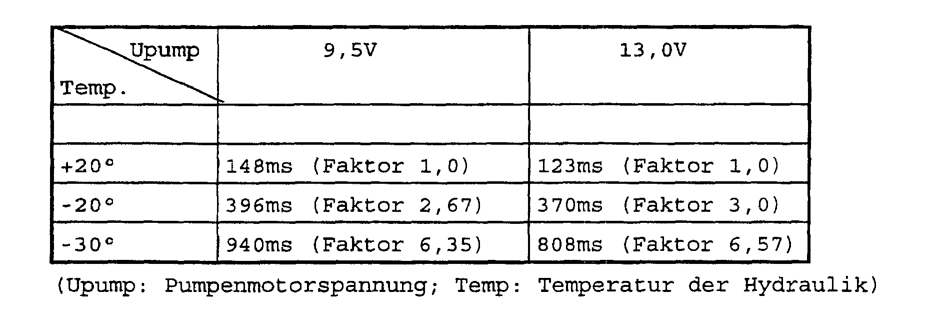

In einem bevorzugten Ausführungsbeispiel wird die Umgebungsluft bzw. Hydrauliktemperatur durch eine eigene Meßeinrichtung erfaßt. In einem anderen vorteilhaften Ausführungsbeispiel wird die Temperatur aus dem Nachlauf der Pumpe abgeleitet. Es hat sich gezeigt, daß die Zeitdauer, die nach dem Abschalten der Pumpe bis zum Unterschreiten eines vorgegebenen Schwellwertes durch die Pumpenmotorspannung oder die Pumpendrehzahl vergeht, ein Maß für die Temperatur der Hydraulik bzw. der Umgebungsluft ist.

Erfindungsgemäß wird also, wenn auf tiefe Temperatur erkannt wird, die Ansteuerzeiten der Magnetventile um einen Faktor korrigiert, so daß durch die korrigierte Pulslänge ein vorbestimmter Druckaufbau in der jeweiligen Radbremse erfolgt. Die in der Tabelle dargestellten Pulslängen ergeben einen Druckaufbau von 10 bar. Entsprechend zeigt sich eine Abhängigkeit von der Pumpenmotorspannung bzw. von dem von der Druckquelle Systemdruck. Der in der Tabelle angegebene untere Spannungswert stellt dabei einen zulässigen Grenzwert für die Pumpenmotorspannung dar. Unterhalb dieses Spannungsbereichs wird von einem Fehlerzustand ausgegangen.

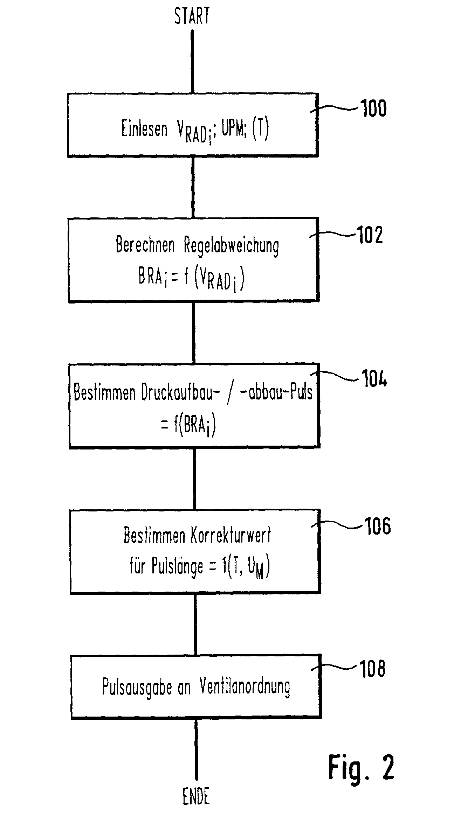

In Figur 2 ist anhand eines Flußdiagramms eine bevorzugte Realisierung der erfindungsgemäßen Lösung als Rechnerprogramm dargestellt. Nach Start des Programmteils zu vorgegebenen Zeitpunkten wird im ersten Schritt 100 die Radgeschwindigkeit VRADi, die Pumpenmotorspannung UPM sowie ggf, die Temperatur T der Umgebungsluft bzw. der Hydraulik eingelesen. Daraufhin wird im Schritt 102 in bekannter Weise die Regelabweichung BRAi auf der Basis der Radgeschwindigkeiten VRADi für die Antriebsräder des Fahrzeugs berechnet. Im darauffolgenden Schritt 104 werden Druckaufbau- bzw. Druckabbaupulse abhängig von der ermittelten Regelabweichung BRAi für jedes Rad gebildet. Im darauffolgenden Schritt 106 werden die Korrekturwerte für die Pulslänge auf der Basis der erfaßten oder abgeschätzten Temperatur und/oder der Pumpenmotorspannung aus einer vorgegebenen Tabelle ermittelt, im darauffolgenden Schritt 108 die Pulslänge entsprechend, vorzugsweise durch Multiplikation oder Addition der ursprünglichen Pulslänge mit dem ermittelten Korrekturfaktor, korrigiert und an die Ventilanordnung der Radbremse bzw. Radbremsen ausgegeben. Danach wird der Programmteil beendet und zu gegebener Zeit wiederholt.

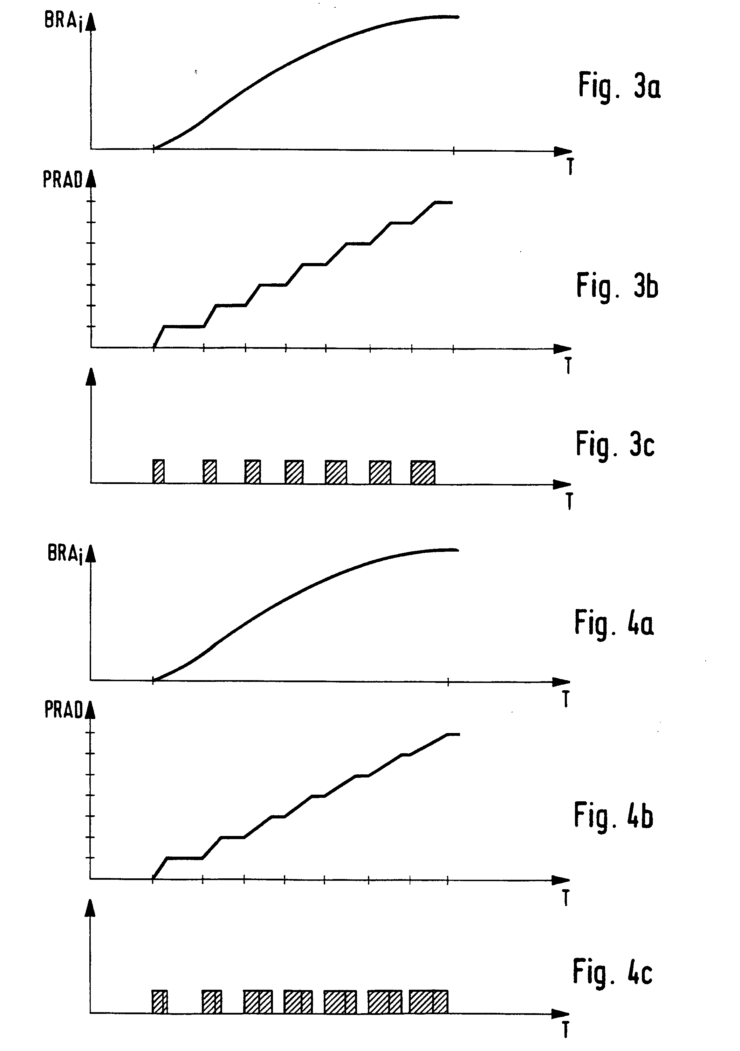

In den Figuren 3 und 4 sind Zeitdiagramme dargestellt, anhand derer die Wirkungsweise der erfindungsgemäßen Lösung verdeutlicht ist. Dabei zeigen die Figuren 3a bzw. 4a den Verlauf der Regelabweichung BRAi an einem Antriebsrad über der Zeit, die Figuren 3b bzw. 4b den entsprechenden Verlauf des Raddrucks und die Figuren 3c bzw. 4c die Druckaufbaupulse. Figur 3 beschreibt dabei die Situation bei Normaltemperatur, während in Figur 4 die Situation bei Tieftemperatur dargestellt ist.

Ab einem bestimmten Zeitpunkt neige ein Antriebsrad zum Durchdrehen. Dadurch erhöht sich die Regelabweichung BRA für dieses Antriebsrad gemäß den identischen Darstellungen in Figur 3a und 4a. Im Rahmen der Antriebsschlupfregelung wird zur Verringerung der Durchdrehneigung und zur Verringerung der Regelabweichung durch entsprechende Pulsansteuerung der Ventile Druck aufgebaut. Der stufenförmige Druckaufbau entsprechend den ausgegebenen Pulsen ist in Figur 3b dargestellt. Die den Druckaufbau bewirkenden Pulse sind in Figur 3c dargestellt. Diese werden mit zunehmendem Druckniveau größer, da dann infolge der verringerten Druckdifferenz die Druckanstiegszeiten größer werden und zum Erreichen eines gleichmäßigen Druckaufbaues längere Ventilöffnungszeiten notwendig sind. Bei tiefen Temperaturen wird erfindungsgemäß die Pulslänge gemäß der Temperatur korrigiert, d.h. bezüglich des Druckaufbaus verlängert. Dabei wird angestrebt, daß auch bei tiefen Temperaturen der bei normalen Betriebstemperaturen vorgesehene Druckanstieg erreicht wird. Um eine mit Figur 3b vergleichbare Dynamik im Druckaufbau zu erreichen, werden die Pulslängen gemäß Figur 4c ausgehend von den Pulslängen gemäß Figur 3c verlängert. Dabei ergibt sich eine zunehmende Verlängerung mit zunehmender ursprünglicher Pulslänge.

Die entsprechenden Maßnahmen werden auch beim Druckabbau angewendet.

Die Abhängigkeit der Druckaufbaudynamik von der Pumpenmotorspannung bzw. dem erreichten Systemdruck führt zu entsprechenden Ergebnissen.

In einem anderen vorteilhaften Ausführungsbeispiel wird im Rahmen der erfindungsgemäßen Lösung nicht die Pulslänge, sondern die Pausenzeit zwischen zwei Pulsen bzw. die Frequenz oder Periodendauer des Signals bzw. allgemein der wenigstens eine veränderliche Parameter des wenigstens einen Steuersignals (auch bei kontinuierlichen Steuersignalen) angepaßt.

## Patentansprüche

1. Verfahren zur Steuerung der Bremsanlage eines Fahrzeugs, mit folgenden Schritten:
Ermitteln wenigstens eines Steuersignals mit wenigstens einem veränderlichen Parameter,
Korrigieren des wenigstens einen veränderlichen Parameters des wenigstens einen Steuersignals abhängig von wenigstens einer Betriebsgröße der Bremsanlage,
Ausgeben des wenigstens einen korrigierten Steuersignals zum Auf- oder Abbau des Drucks in wenigstens einer Radbremse der Bremsanlage, dadurch gekennzeichnet, dass
die wenigstens eine Betriebsgröße wenigstens eine der folgenden Größen ist:
die Temperatur der Umgebungsluft der Bremsanlage,
die Größe der Versorgungsspannung eines eine Druckquelle steuernden elektrischen Motors,
die Größe des von einer Druckquelle erreichten Systemdrucks in der Bremsanlage ist.

2. Verfahren nach Anspruch 1, dadurch gekennzeichnet, dass das wenigstens eine Steuersignal ein Pulssignal ist und der wenigstens eine veränderliche Parameter die Pulslänge, die Pulspausenzeit, die Pulshöhe und/oder die Frequenz des Pulssignals ist.

3. Verfahren nach einem der vorhergehenden Ansprüche, dadurch gekennzeichnet, dass das wenigstens eine Steuersignal im Rahmen einer Antriebsschlupfregelung, einer Antiblockierregelung, einer Fahrdynamikregelung und/oder einer Druckregelung abhängig vom Fahrerbremswunsch gebildet wird.

4. Verfahren nach Anspruch 3, gekennzeichnet durch folgende ergänzende Schritte
Bilden einer Regelabweichung (BRA),
Bestimmen des wenigstens einen Parameters abhängig von dieser Regelabweichung (BRA) im Sinne einer vorgegebenen Druckänderung,
Bilden eines Korrekturfaktors abhängig von der wenigstens einen Betriebsgröße, mit dem der wenigstens eine Parameter korrigiert wird.

5. Verfahren nach einem der vorhergehenden Ansprüche, dadurch gekennzeichnet, dass zur Korrektur eine Multiplikation durchgeführt wird.

6. Verfahren nach Anspruch 4, dadurch gekennzeichnet, dass die Größe des Korrekturfaktors derart vorgegeben ist, dass die gewünschte Druckänderung erreicht wird.

7. Vorrichtung zur Steuerung der Bremsanlage eines Fahrzeugs, mit einer elektrischen Steuereinheit (5), welche wenigstens ein Steuersignal mit wenigstens einem veränderlichen Parameter zum Druckaufbau oder Druckabbau in wenigstens einer Radbremse (8, 9) der Bremsanlage ermittelt, wobei der wenigstens eine Parameter abhängig von wenigstens einer Betriebsgröße verändert wird, dadurch gekennzeichnet, dass die elektronische Steuereinheit (5) wenigstens eine der Größen Temperatur der Umgebungsluft, Versorgungsspannung eines eine Druckquelle steuernden elektrischen Motors oder des von der Druckquelle erreichten Systemdrucks in der Bremsanlage ermittelt, wobei der wenigstens eine Parameter nach Maßgabe wenigstens einer dieser Größen korrigiert wird.

## Claims

1. Method for controlling the braking system of a vehicle, having the following steps:
determining at least one control signal having at least one variable parameter,
correcting the at least one variable parameter of the at least one control signal as a function of at least one operating variable of the braking system,
outputting at least one corrected control signal for the purpose of increasing or decreasing the pressure in at least one wheel brake of the braking system, characterized in that
the at least one operating variable is at least one of the following variables:
the temperature of the ambient air of the braking system,
the magnitude of the supply voltage of an electric motor controlling a pressure source,
the magnitude of the system pressure, achieved by a pressure source, in the braking system.

2. Method according to Claim 1, characterized in that the at least one control signal is a pulse signal, and the at least one variable parameter is the pulse length, the interpulse period, the pulse height and/or the frequency of the pulse signal.

3. Method according to one of the preceding claims, characterized in that the at least one control signal is formed within the framework of traction slip control, anti-lock control, vehicle dynamics control and/or pressure control as a function of the driver's braking requirement.

4. Method according to Claim 3, characterized by the following supplementary steps:
forming a system deviation (BRA),
determining the at least one parameter as a function of this system deviation (BRA) for the purpose of a prescribed change in pressure,
forming, as a function of the at least one operating variable, a correction factor with the aid of which the at least one parameter is corrected.

5. Method according to one of the preceding claims, characterized in that a multiplication is carried out for the purpose of correction.

6. Method according to Claim 4, characterized in that the magnitude of the correction factor is prescribed in such a way that the desired change in pressure is achieved.

7. Device for controlling the braking system of a vehicle, having an electric control unit (5) which determines at least one control signal having at least one variable parameter for the purpose of increasing or decreasing pressure in at least one wheel brake (8, 9), of the braking system, the at least one parameter being varied as a function of at least one operating variable, characterized in that the electronic control unit (5) determines at least one of the variables of temperature of the ambient air, supply voltage of an electric motor controlling a pressure source, or the system pressure, reached by the pressure source, in the braking system, the at least one parameter being corrected in accordance with at least one of these variables.

## Revendications

1. Procédé pour commander l'installation de freinage d'un véhicule, comprenant les étapes suivantes :
- détermination d'au moins un signal de commande avec au moins un paramètre variable,
- correction d'au moins un paramètre variable en fonction d'au moins une grandeur de fonctionnement de l'installation de freinage,
- délivrance d'au moins un signal de commande corrigé pour faire monter ou descendre la pression dans au moins un frein de roue de l'installation de freinage,
caractérisé en ce que
l'une au moins des grandeurs de fonctionnement est au moins l'une des grandeurs suivantes :
- la température de l'air ambiant de l'installation de freinage,
- la grandeur de la tension d'alimentation d'un moteur électrique commandant la source de la pression,
- la grandeur de la pression du système obtenu par une source de pression dans l'installation de freinage.

2. Procédé selon la revendication 1,
caractérisé en ce que
l'un au moins des signaux de commande est un signal d'impulsion et l'un au moins des paramètres variables est la longueur de l'impulsion, le temps de pause entre deux impulsions, la hauteur de l'impulsion et/ou la fréquence du signal d'impulsion.

3. Procédé selon l'une quelconque des revendications précédentes,
caractérisé en ce que
au moins un signal de commande est formé dans le cadre d'une régulation du patinage à l'entraînement, d'une régulation antiblocage, d'une régulation de la dynamique de la marche et/ou d'une régulation de la pression en fonction du souhait du conducteur.

4. Procédé selon la revendication 3,
caractérisé par
les étapes complémentaires suivantes :
- formation d'une erreur de réglage(BRA),
- détermination d'au moins un paramètre en fonction de cette erreur de réglage (BRA) dans le sens d'une variation prédéfinie de la pression,
- formation d'un facteur de correction en fonction d'au moins une grandeur de fonctionnement, avec lequel on corrige au moins un paramètre.

5. Procédé selon l'une des revendications précédentes,
caractérisé en ce que
pour effectuer la correction on fait une multiplication.

6. Procédé selon la revendication 4,
caractérisé en ce que
la grandeur du facteur de correction est prédéfinie d'une manière telle que l'on obtient la variation de pression voulue.

7. Dispositif servant à commander l'installation de freinage d'un véhicule, comprenant une unité électrique de commande (5), qui détermine au moins un signal de commande avec au moins un paramètre variable pour monter ou abaisser la pression dans au moins un frein de roue (8, 9) de l'installation de freinage, l'un au moins des paramètres étant modifié en fonction d'au moins une grandeur de fonctionnement,
caractérisé en ce que
l'unité électronique de commande (5) détermine dans l'installation de freinage au moins l'une des grandeurs suivantes : la température de l'air ambiant, la tension d'alimentation d'un moteur électrique commandant une source de pression, ou la pression du système atteinte par la source de pression, l'un au moins des paramètres étant corrigé selon la détermination d'au moins l'une de ces grandeurs.
